# EUROPEAN PATENT APPLICATION

(11) **EP 4 848 209 A1**
(43) Date of publication of application: **02.12.2026**
(21) Application number: 25305760.8
(22) Date of filing: 27.05.2025
(51) Int. Cl.: G06T 9/00, G06N 3/045, H04N 19/119, H04N 19/176

(54) **METHODS AND DEVICES FOR PARTITION BASED HYBRID INR CODING**

(71) Applicant: InterDigital CE Patent Holdings, SAS, 75017 Paris (FR)
(72) Inventor: SCHNITZLER, Francois, 56890 SAINT AVE (FR); GALPIN, Franck, 35235 THORIGNE-FOUILLARD (FR); CHEN, Ya, 35700 RENNES (FR)
(74) Representative: Interdigital

(57) **Abstract**

In various implementations, methods and devices are disclosed that encode or decode a signal wherein the signal is divided into a plurality of partitions and wherein a hybrid INR is used for coding each partition of the signal. For each partition of the plurality of partitions, the partition is associated to a respective processing model of a plurality of processing models, latent variables are associated with coordinates of samples of the signal where model parameters, model parameters are coded from an encoder to a decoder. According to one or more embodiments, one or more respective neighboring partitions or alternative latent variables are further used in the respective processing model of the partition to complete the receptive field of the processing models. Information indicating a selection of one or more respective neighboring partitions or alternative latent variables used in the respective processing model of the partition may be signaled.

## Description

### BACKGROUND

The present application is related to signal compression (e.g. image, video and/or 3D scene or object, haptic textures compression) with neural network codec such as hybrid INR. The present embodiments relate to a method and an apparatus for encoding, decoding, transmitting a signal where partitions of the signal are coded by a hybrid INR, wherein latent variables of a partition, latent variables of one or more respective neighboring partitions, and/or the alternative latent variables are fed to the processing model.

### BRIEF SUMMARY

In various implementations, methods and devices are disclosed that indicate to a decoder whether latent variables of one or more respective neighboring partitions, and/or the alternative latent variables may be used to generate latent variables of a hybrid INR model for a partition of the signal.

Briefly stated, in one embodiment a method of decoding is disclosed that comprises decoding information indicating partitioning of the signal into a plurality of partitions; decoding, for each partition of the plurality of partitions, information indicating association of the partition to a respective processing model of a plurality of processing models, information indicating a selection of one or more respective neighboring partitions or alternative latent variables used in the respective processing model of the partition; decoding model parameters for the plurality of processing models; decoding latent variables; for each partition of the plurality of partitions, processing the latent variables of the partition, latent variables of the one or more respective neighboring partitions, the alternative latent variables to form upsampled latent variables, processing the upsampled latent variables based on the respective processing model to form processed latent variables; reconstructing the partition from the processed latent variables; and concatenating the partitions to form a reconstructed signal.

One embodiment also provides a method of encoding that comprises partitioning of the signal into a plurality of partitions; for each partition of the plurality of partitions, obtaining an association of the partition to a respective processing model of a plurality of processing models, selecting one or more respective neighboring partitions or alternative latent variables used in the respective processing model of the partition, obtaining latent variables associated with coordinates of samples of the signal; encoding model parameters for the plurality of processing models; encoding the latent variables; encoding information indicating partitioning of the signal into a plurality of partitions; and encoding, for each partition of the plurality of partitions, information indicating association of the partition to a respective processing model of a plurality of processing models, information indicating a selection of one or more respective neighboring partitions or alternative latent variables used in the respective processing model of the partition.

One or more embodiments also provide an apparatus for video encoding, decoding or rendering comprising one or more processors and at least one memory coupled to said one or more processors, wherein said one or more processors are configured to perform the encoding, decoding or rendering method according to any of the embodiments described herein.

One or more embodiments also provide a computer program comprising instructions which when executed by one or more processors cause the one or more processors to perform the encoding, decoding or rendering method according to any of the embodiments described herein. One or more of the present embodiments also provide a computer readable storage medium having stored thereon instructions for encoding, decoding or rendering a video according to the methods described herein.

One or more embodiments also provide a computer readable storage medium having stored thereon video data generated according to the methods described above. One or more embodiments also provide a method and apparatus for transmitting or receiving the video data generated according to the methods described herein

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a diagram illustrating an example INR network according to one or more embodiments of the present disclosure;
FIG. 3 is a block diagram illustrating an example video encoder;
FIG. 4 is a block diagram illustrating an example video decoder;
FIG. 5 is a block diagram illustrating an example hybrid INR model;
FIG. 6 is a block diagram illustrating an example video encoder applying a Hybrid INR model;
FIG. 7 is a block diagram illustrating an example video decoder applying a Hybrid INR model;
FIG. 8 is a diagram illustrating prediction of a latent variable distribution, using a spatial context according to one or more embodiments of the present disclosure;
FIG. 9 is a block diagram illustrating an example video encoder applying a predictive hybrid INR model according to one or more embodiments of the present disclosure;
FIG. 10 is a block diagram illustrating an example video decoder 1000 applying a predictive hybrid INR model according to one or more embodiments of the present disclosure;
FIGs. 11A, 11B and 11C illustrate an encoder that partitions a signal into coding units (CU) and associating each coding unit to different upsampling and/or synthesis network of the hybrid INR model according to one or more embodiments of the present disclosure;
FIG. 12 illustrates examples of pixels, receptive field and partitioning in coding units (CU) according to one or more embodiments of the present disclosure.
FIG. 13 is a block diagram illustrating an encoding method according to one or more embodiments of the present disclosure;
FIG. 14 is a block diagram illustrating a decoding method according to one or more embodiments of the present disclosure;
FIG. 15 is a block diagram illustrating a decoding method according to one or more embodiments of the present disclosure; and
FIG. 16 is a block diagram illustrating specific examples of processing models according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

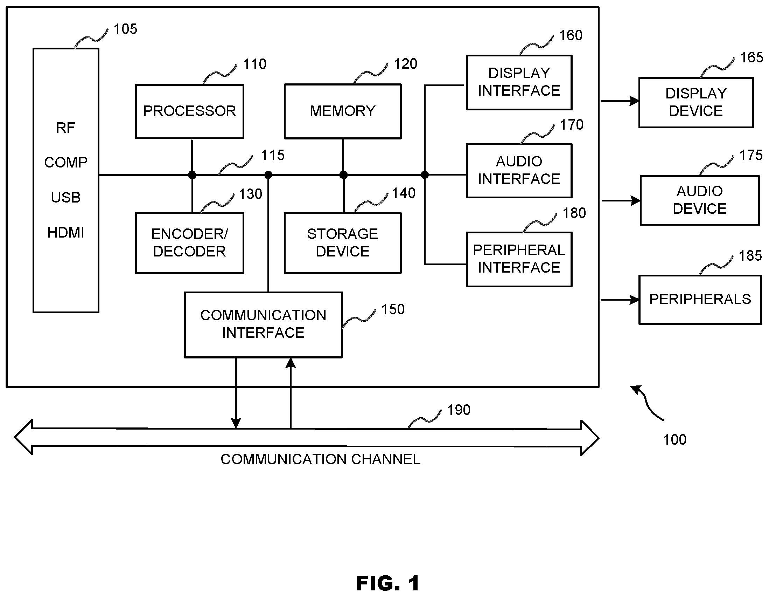

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Recent improvements to video compression technology include neural network compression. Implicit Neural Representation (INR) is one neural network-based compression method that has recently emerged among other studied techniques. An INR network is trained to predict a pixel value of an image, ***x***(*i, j*)*,* based on the pixel's coordinates (*i, j*) - that is, *f_{θ}*(*i, j*) = (*r, g, b*) (or *f_{θ}*(*i, j*) = (*y, u, v*)) where *f_{θ}* denotes the INR network operation and *θ* the INR network parameters.

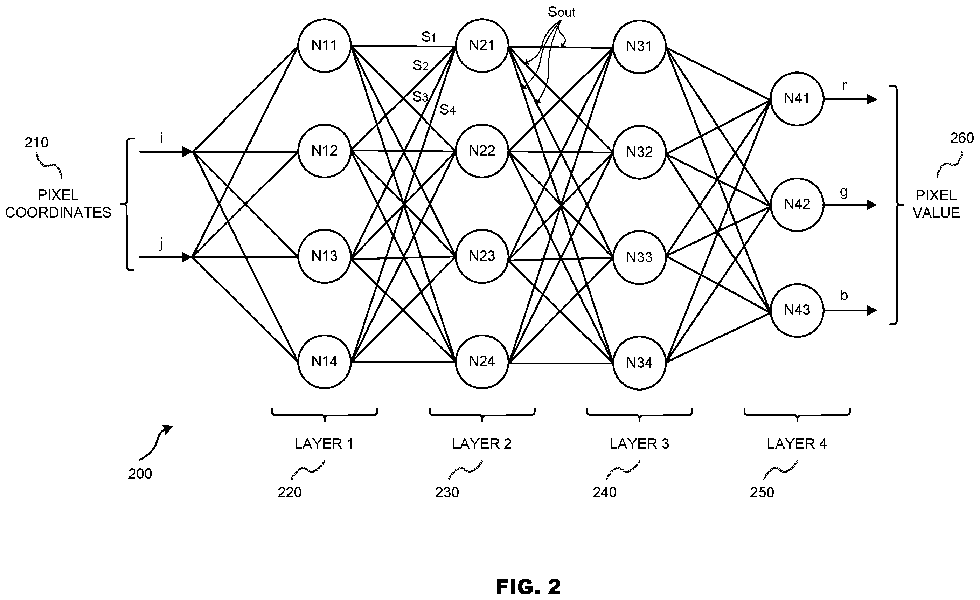

FIG. 2 is a diagram illustrating an example INR network 200. An INR network is a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values (*i, j*) 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel *x,* respectively, *r, g,* and *b* (or color component values of any other color model, such as *y*, *u*, and *v*)*.*

Each node in the network 200 represents an operator that generates an output signal based on the node's inputs. For example, node N21 of the second layer 230 receives as an input the output signals of nodes N11, N12, N13, and N14, respectively, *s*₁, *s*₂, *s*₃, and *s*₄. These inputs are translated into an output signal *sₒᵤₜ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ (1)' where, *L* denotes the number of input signals (i.e., the number of nodes from the previous layer that connect to the node), *s =* {*sᵢ* : *i* = 1 *to L*} denotes the node's input signal vector, *sₒᵤₜ* denotes the node's output signal, *p* = {*pᵢ* : *i* = 0 *to L*} denotes the node's parameter vector (or weight vector), and *A* denotes an activation function (e.g., ReLU, Sigmoid, or Tanh). The weight vectors (and parameters of the activation functions, if such parameters exist) of respective nodes are collectively referred to as the parameters *θ* of the network 200. These parameters *θ* are determined through a training process. The network operation, denoted by *f_{θ},* is therefore defined by the network parameters *θ*.

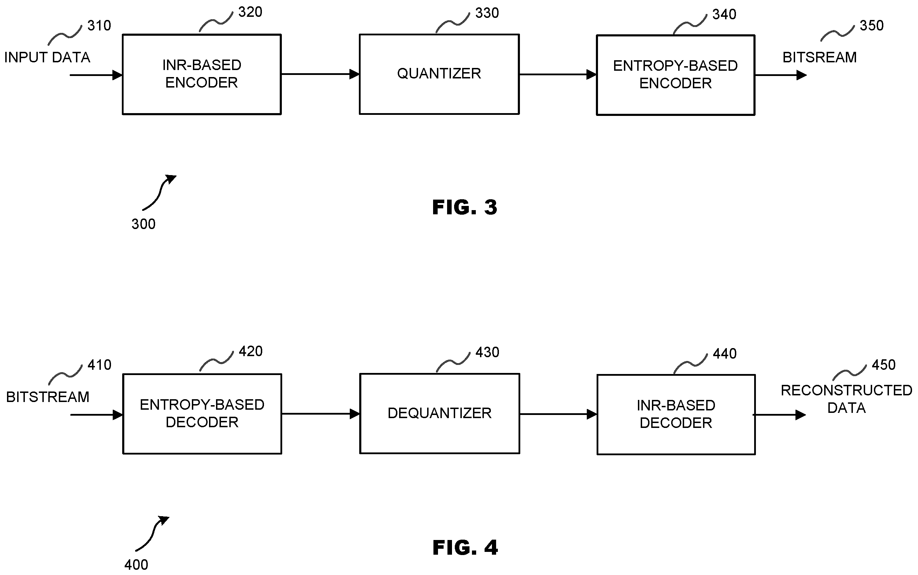

Hence, an INR network 200 is trained to predict a pixel value of an image, ***x***(*i, j*)*,* based on the pixel's coordinates (*i, j*) - that is, *f_{θ}*(*i, j*) = (*r, g, b*) (or *f_{θ}*(*i, j*) = (*y, u, v*))*.* During a training phase of an INR network 200, the parameters *θ* (or a subset of them) are determined. This is done via an optimization process through which the parameters *θ* that minimize a cost function can be determined. For example, the following cost function can be used: $Cost = D \left(x, {f}_{θ}\right) + λR \left(θ\right)$ (2) where, D is a distortion measure, measuring the fidelity of the estimated pixel values, provided by *f**_{θ}**,* relative to the ground truth, that is, the corresponding pixel values from the original image, denoted by ***x***. And, where *R* is the resulting bitrate of the encoded parameters *θ* (e.g., encoded by quantization and entropy coding as discussed with respect to FIG. 3). A trade-off parameter *λ* can be set to determine the balance between *D* and *R*. Note that the distortion measure *D* can be any metric that measures the distance (or similarity) between the original image ***x*** and its estimated version provided by *f_{θ},* such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ (3) where, *W* and *H* are the width and height of the image ***x*** that the INR network is trained to predict. The optimization of the network parameters *θ*, according to equation (2), is typically performed by a machine learning optimization technique, applying, for example, a batch gradient descent algorithm. Following the training of the INR network 200 and using the optimal parameters *θ* (obtained via the optimization process), the INR network can be applied to predict a pixel value based on its corresponding coordinate values.

Using INR networks for the application of encoding and decoding images is further described with respect to FIGS. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f_{θ},* representative of the INR network, to determine the optimal network parameters *θ*. For example, for an input image with dimensions *W* and *H, W* times *H* pairs of pixel coordinates (*i, j*) and corresponding pixel values ***x***(*i, j*) can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f_{θ}* using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions *W* = 256 by *H =* 256 based on the corresponding coordinates. At the decoder 400, pixel values of the image can be predicted by evaluating the trained INR network using: 1) the full coordinate set used for training, including all pairs of *i* ∈ 0,1, ...,255 and *j* ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

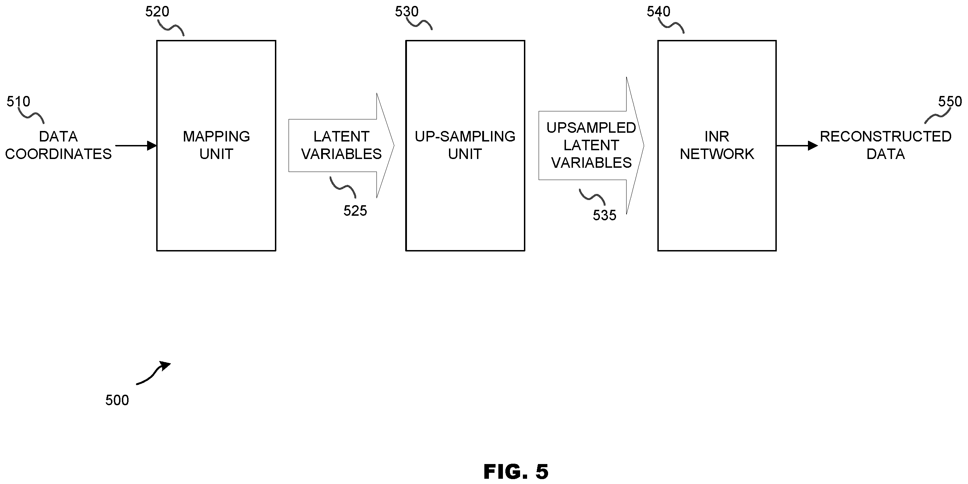

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR model 500. In an aspect, this hybrid INR model 500 can be applied by the INR-based encoder 320 of FIG. 3 and the INR-based decoder 440 of FIG. 4. In the example of FIG. 5, during the encoding of input data (that is, the training of the network 500), the input data's coordinates 510 are first mapped, by a mapping unit 520, into respective latent variables 525. The mapping can be implemented by a lookup table or a hash function, for example. The mapping may also involve any transformation, such as a Fourier transformation, a coordinate transformation, a normalization transformation, or a combination thereof. The latent variables 525 can be up-sampled, by an up-sampling unit 530, resulting in up-sampled latent variables 535. The up-sampled latent variables are used as an input to a neural network 540 (e.g., such as INR network 200), trained to produce the reconstructed data 550. We will also denote this network the synthesis network. In a hybrid-INR model 500 the latent variables 525 are trained together with the parameters *θ* of the neural network 540, resulting in optimal network parameters and optimal latent variables. If applicable, some parameters of at least one transformation could be trained as well. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR model 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained synthesis network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained synthesis network 540 using the decoded and dequantized network parameters of the synthesis network.

A hybrid INR model, named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune as in many hybrid INR models, the latent variables are arranged in hierarchical layers (or channels) ranging from a low-resolution representation (that provides for compact representation of smooth image regions) to a high-resolution representation (that captures the fine details of the image).

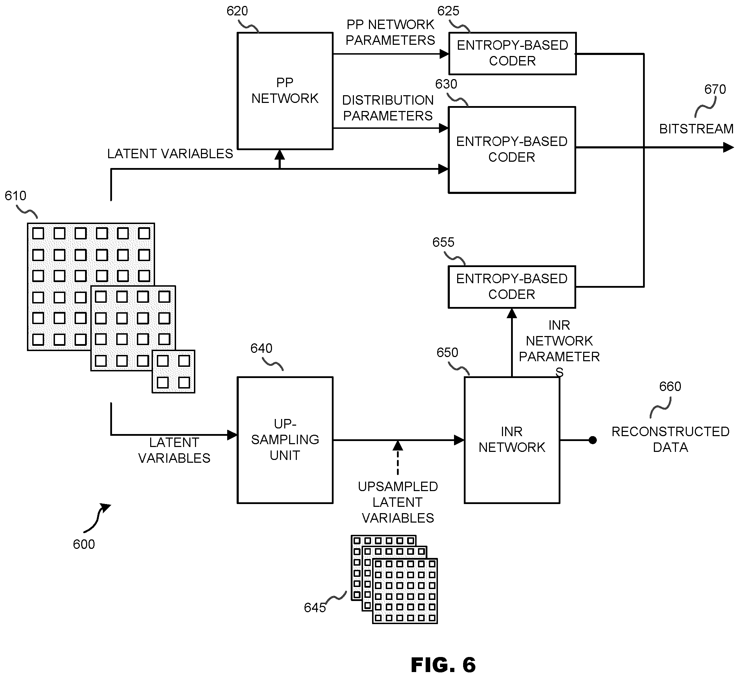

In hybrid INR models, the latent variables, denoted by *y*, are typically the largest contributor to the bitrate (several orders of magnitude larger than that contributed by the synthesis network parameters). One approach to reduce the transmission cost of these latent variables is to entropy code these variables based on their learned distributions, as described in Ladune. Principles of the hybrid INR model proposed in Ladune are described below in reference to FIGS. 6-8.

FIG. 6 is a block diagram illustrating an example video encoder 600 applying a hybrid INR model. The encoder 600 includes a probability prediction (PP) network 620, an up-sampling unit 640, a synthesis network 650, and entropy-based coders 625, 630, 655. The encoder 600 is configured to process latent variables 610 (e.g., latent variables 525 generated by the mapping unit 520 of FIG. 5). The encoder 600 up-samples, by the up-sampling unit 640, the latent variables. This reconstructed image is obtained by using the up-sampled latent variables 645 as input of the synthesis network 650. Together with the up-sampled latent variables 645, the synthesis network 650 is trained (overfitted) to produce reconstructed data 660 (e.g., a reconstructed image of a video frame). The training results in optimal INR synthesis network parameters *θ* that are coded, by the entropy-based coder 655, into the bitstream 670. In an inference mode, reconstructing the data (e.g., by a decoder 700) involves feeding the trained INR synthesis network, defined by the optimal network parameters *θ*, with the up-sampled latent variable. And so, in addition to the network parameters *θ*, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by ψ, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the synthesis network parameters rely on respective non-learned distributions. In an aspect, for some of the latent variables, respective non-learned distributions can be used by the entropy-based coder 630. These non-learned distributions may be fixed distributions or may be distributions that was learned with respect to other latent variables (e.g., latent variables representing data from previous frames).

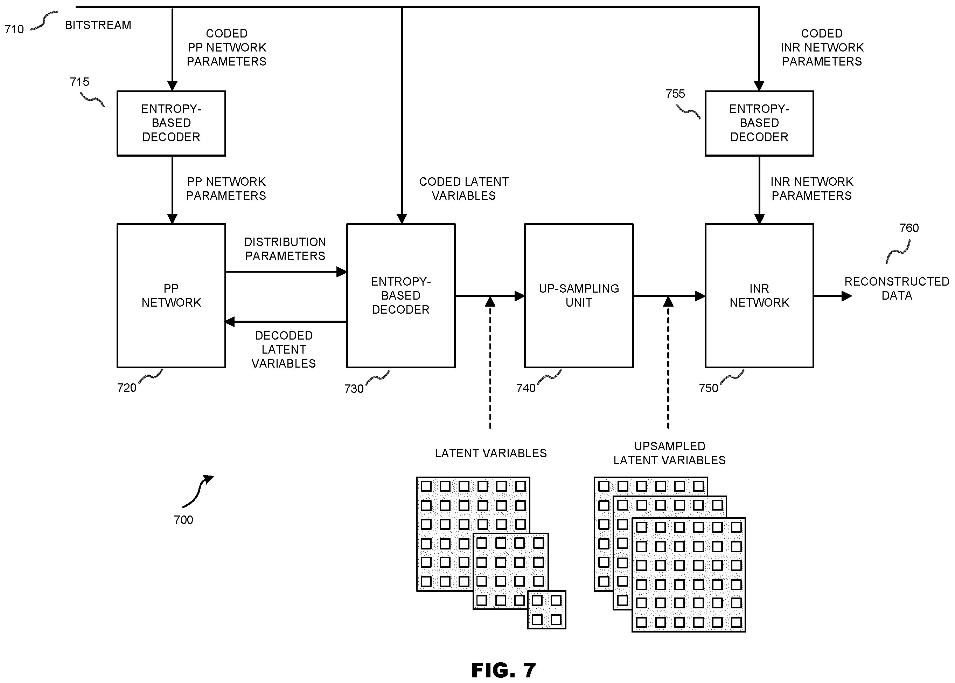

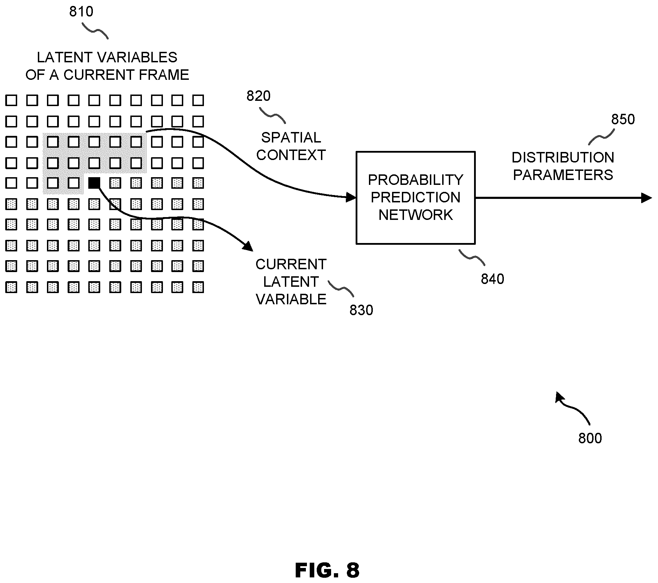

FIG. 7 is a block diagram illustrating an example video decoder applying a hybrid INR model 700. The decoder 700 includes a PP network 720, an up-sampling unit 740, an INR synthesis network 750, and entropy-based decoders 715, 730, 755. The PP network 720 produces distribution parameters of respective latent variables. The PP network 720 operates based on learned PP network parameters ψ, determined during the training of the PP network 620. The entropy-based decoder 715 decodes these PP network parameters from the bitstream 710. Based on the produced 720 distribution parameters, the entropy-based decoder 730 decodes the latent variables from the bitstream 710. Already decoded latent variables are provided back to PP network to serve as a context in producing the distribution parameters of the currently decoded latent variable (as further described in reference to FIG. 8). The decoded latent variables are then up-sampled by the up-sampling unit 740 (as performed by the up-sampling unit 640 at the encoder 600). Fed by the up-sampled latent variables, the synthesis network 750 reconstructs the data 760 (e.g., a reconstructed image of a video frame) it is trained to synthesize based on the INR synthesis network parameters, decoded from the bitstream 710 by the entropy-based decoder 755.

The operation of the hybrid INR model is further explained with respect to an image ***x*** of a video frame, however, ***x*** may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR model 650, 750 utilizes a hierarchical representation that includes multiple layers of different spatial resolutions 610. Each layer represents an image ***x*** with a width *W* and a height *H* with a corresponding level of detail. Formally, the discrete latent variables, denoted by *ŷ*, can include *K* layers of latent variables: *ŷ =* {*ŷₖ* , *k =* 0: (*K* - 1)}. Each layer *ŷₖ* is of width *W* /2*^{k}* and of height *H* /2*^{k}.* During the up-sampling 640, each layer *ŷₖ* may be up-sampled by a factor of 2*^{k}* (using any interpolation method) to obtain the up-sampled layer version, denoted by *ẑₖ* . Together, the up-sampled layers, *ẑ* = {*ẑₖ, k =* 0: (*K -* 1)}, result in a dense 3D representation 645 of dimension *W* by *H* by *K.* Thus, the synthesis network 650 can be trained based on *W* by *H* inputs of *ẑ*(i, j), where each input can include up to *K* latent variables, that is, *ẑ*(i, j) = {*ẑ*(i, j, *k*)*, k* = 0: (*K* - 1))}. For example, the trained synthesis network 750 can be used to predict a reconstructed pixel ***x̂***(*i*, *j*), of the original pixel *x*(*i, j*), by *x̂*(*i, j*) *= f_{θ}*(*z*(i*,* j)). In an aspect, depending on the desired bitrate, not all the layers of the latent variables may be used to represent (code) an image ***x*.**

When compressing an image ***x*** the goal is to do so while minimizing a cost function, as discussed with respect to equation (2). In the case of a hybrid INR model, the cost of coding an image can be expressed as: $Cost = D \left(x,{f}_{θ}\left(\hat{z}\right)\right) + λR \left(\hat{y}, θ, ψ\right) ,$ (4) where ***x*** denotes an image to be coded with *H* hight, *W* width, and *F* color channels; where *ŷ* denotes the quantized latent variables and *ẑ* denotes their up-sampled version; where *f_{θ}* denotes the synthesis network 650, 750 and *θ* denotes the synthesis network parameters; where *f*_{ψ} denotes the PP network 620, 720 and ψ denotes the PP network parameters; where *D* denotes a distortion metric measuring the distance between the image ***x*** and its reconstructed version *x̂*, as produced by the synthesis network *f_{θ}* from the up-sampled latent variables *ẑ*, that is, ***x̂*** *= f_{θ}*(*ẑ*); and where *R* denotes the rate (in bits per pixel) measuring the number of bits that are required to represent a pixel in a bitstream, that is, the number of bits that are required to represent *ŷ*, *θ*, and ψ. The distortion *D* and the rate *R* are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

The objective, thus, is to find the latent variables *ŷ*, the synthesis network parameters *θ*, and the PP network parameters ψ that minimize the coding cost, as follows: ${min}_{\hat{y} , θ , ψ} Cost = {min}_{\hat{y} , θ , ψ} \left(D\left(x,{f}_{θ}\left(\hat{z}\right)\right)+λR\left(\hat{y}, θ, ψ\right)\right) .$ (5)

Since the contribution of the synthesis network parameters *θ* and the PP network parameters ψ to the rate *R* is not as significant as that of the latent variables *ŷ*, only the latter can be considered when minimizing the coding cost, that is, *R*(*ŷ, θ*, ψ ) ≈ *R*(*ŷ*)*.* Furthermore, *R*(*ŷ*) can be replaced by the cross entropy. Thus, equation (5) can be replaced by: ${min}_{\hat{y} , θ , ψ} Cost = {min}_{\hat{y} , θ , ψ} \left(D\left(x,{f}_{θ}\left(\hat{z}\right)\right)-{λlog}_{2} {P}_{ψ}\left(\hat{y}\right)\right) ,$ (6) where *P_{ψ}*(*ŷ*) is the joint distribution of the latent variables *ŷ*. According to Equation (6), minimizing the cost involves minimizing the rate associated with the latent variables. This can be achieved by reducing the amount of information contained in the latent variables, at the price of a less accurate reconstruction, as less information in *ŷ* is likely to increase the distortion *D*. Alternatively, minimizing the cost can be achieved by obtaining estimates of the distributions of the respective latent variables, as described herein.

Due to the high dimensionality of the latent variables, modeling of the joint distribution of *ŷ*, *P*_{ψ}(*ŷ*), is not tractable. Instead, *P*_{ψ}(*ŷ*) can be factorized as follows: ${P}_{ψ} \left(\hat{y}\right) = {\prod }_{i , j , k} {p}_{ψ} \left({\hat{y}}_{ijk}\left|{c}_{ijk}^{s}\right.\right) ,$ (7) where ${p}_{ψ} \left({\hat{y}}_{ijk}\left|{c}_{ijk}^{s}\right.\right)$ denotes a discrete conditional probability of a latent variable at position (i, j, k) conditioned on a corresponding spatial context ${c}_{ijk}^{s}$. Where (i, j) represents the spatial coordinate of a latent variable in a layer *k*. The spatial context ${c}_{ijk}^{s}$ may be provided by spatially neighboring latent variables that have already been decoded, and preferably selected in a way that enables parallel decoding of the different layers of the latent variables (e.g., in a wavefront-like approach). In practice, the discrete distribution ${p}_{ψ} \left(\left.{\hat{y}}_{ijk}\right|{c}_{ijk}^{s}\right)$ can be modeled by integrating the continuous distribution of the non-quantized latent variable, denoted by *g*(*y*) and modeled as a Laplacian distribution, for example. Thus, the PP network 620 learns the expectation parameter, µᵢⱼₖ, and the scale parameter, σᵢⱼₖ, based on the context ${c}_{ijk}^{s}$. Accordingly, the probability of a latent variable *ŷᵢⱼₖ* can be expressed as: ${p}_{ψ} \left(\left.{\hat{y}}_{ijk}\right|{c}_{ijk}\right) = {\int }_{{\hat{y}}_{ijk} - 0.5}^{{\hat{y}}_{ijk} + 0.5} g \left(y\right) dy ,$ (8) where g ≅ 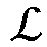 (µᵢⱼₖ, σᵢⱼₖ) denotes a Laplacian distribution. Thus, in the case of a Laplacian distribution, for example, given a context cᵢⱼₖ, the PP network 620 can be trained to produce the corresponding distribution parameters, that is, {µᵢⱼₖ, σᵢⱼₖ} = f_{ψ}(cᵢⱼₖ), as described next with respect to FIG. 8.

FIG. 8 is a diagram illustrating prediction of a latent variable distribution, using a spatial context 800. For simplicity of the presentation, only one layer of the latent variables 810 is illustrated, however, processes applied to this layer can be similarly applied to the other layers. The example of FIG. 8 illustrates the process of predicting a distribution of a current latent variable (indicated by a black square) to be coded (e.g., by encoder 600 or 900) or to be decoded (e.g., by decoder 700 or 1000). However, when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable at position (*i*, *j*, *k*)*,* latent variables can be selected within a neighborhood located relative to position (*i*, *j*, *k*) (e.g., latent variables grouped by the gray background in FIG. 8) to form the spatial context ${c}_{ijk}^{s}$. The obtained spatial context, ${c}_{ijk}^{s}$, can then be used by the PP network 840 to predict the distribution of the current latent variable. The distribution of the current latent variable is predicted by estimating the parameters of that distribution (e.g., {µᵢⱼₖ, σᵢⱼₖ}). To that end, in the encoder, the PP network 840 is trained to produce, for each latent variable, the distribution parameters 850 based on the respective spatial context. This training can be done by minimizing the coding cost expressed in equation (6). The training of the PP network 840 results in the PP network parameters ψ. In the decoder, the trained PP network 840 is operated in an inference mode to produce, for each latent variable, the distribution parameters 850 from the respective spatial context. The trained PP network 840 operates based on the PP network parameters ψ determined by the encoder during training and provided to the decoder in the bitstream.

In the case of a video stream, for example, a hybrid INR model can be used to represent each image of a video frame by a set of latent variables, *ŷ*, that (together with the PP network parameters ψ and the synthesis network parameters θ) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR model applicable to individual frames (see, Leguay et al., Cool-chic video: Learned video coding with 800 parameters, Data Compression Conference (DCC) 2024, IEEE, pp 23-32, 2024, hereinafter "Leguay").

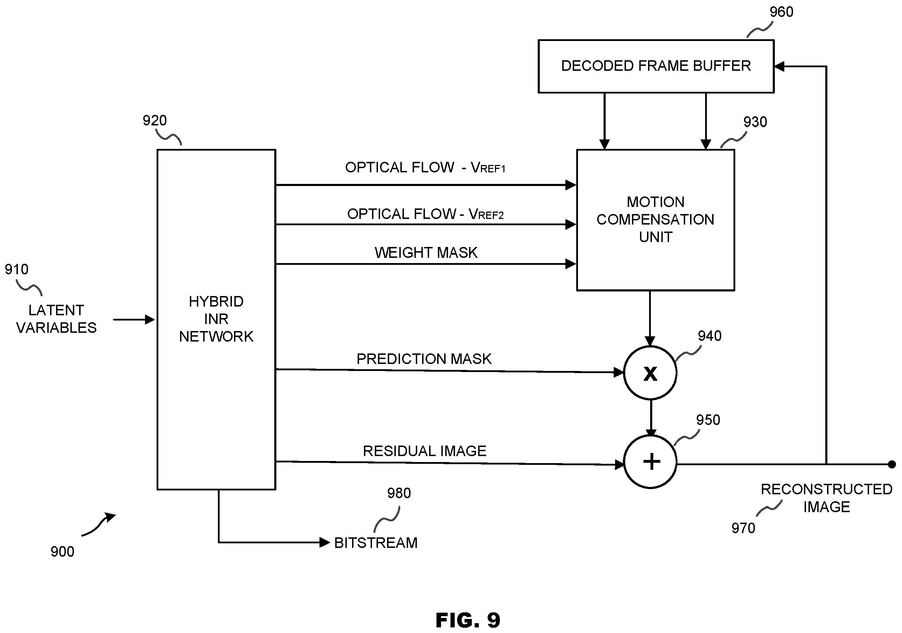

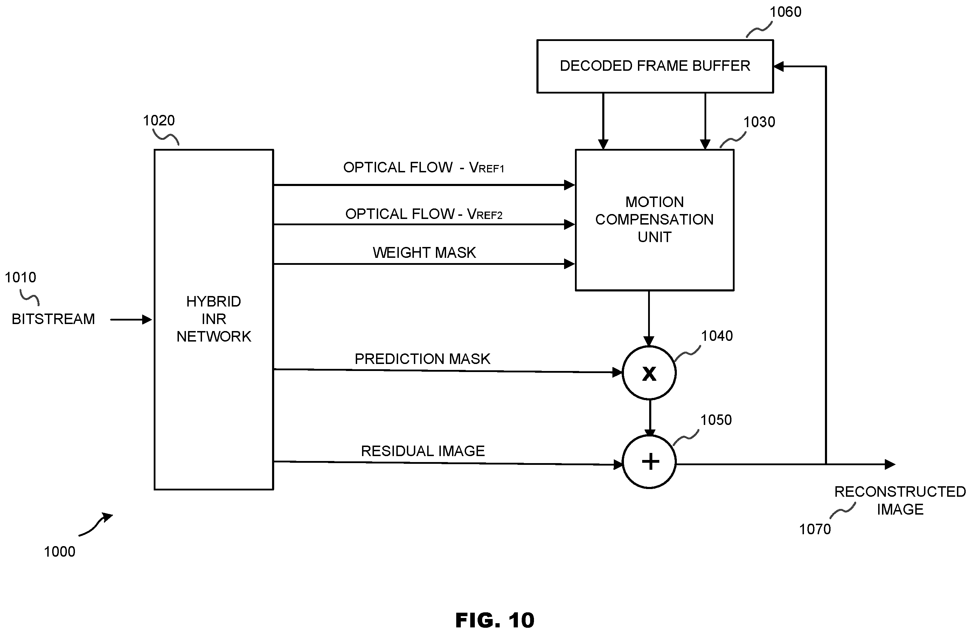

Principles of the predictive hybrid INR model proposed in Leguay are described next in reference to FIGS. 9 and 10. The operation of the predictive hybrid INR model is explained herein with respect to an image ***x*** of a video frame, however, ***x*** may represent other types of data (such as a surface or a volume) that can be associated with a frame. Note that latent variables representative of data regions (e.g., pixels) from a data frame (e.g., a video frame) are referred to herein also as corresponding to that data frame.

FIG. 9 is a block diagram illustrating an example video encoder 900 applying a predictive hybrid INR model. The encoder 900 receives, as an input, latent variables 910 and outputs a bitstream 980. The encoder 900 includes a hybrid INR model 920, a motion compensation unit 930, a multiplier 940, an adder 950, and a decoded frame buffer 960. The hybrid INR model 920 generally operates (in a training mode) as the hybrid INR model described in reference to FIG. 6. However, in this case the hybrid INR model is trained to produce two optical flows, *v*_{*ref*1} and *u*_{*ref*2}*,* a weight mask *β*, a prediction mask ∝, and a residual image ***r*.** The optical flows represent the pixel-wise motion between respective reference frames (already reconstructed images 970, stored in the decoded frame buffer 960) and the current frame. And so, the motion compensation unit 930 can use these optical flows to generate a prediction, denoted by ***x̃**,* of the currently coded image ***x*,** as follows: ${x}^{˜} = β ⋅ warp \left({\hat{x}}_{ref 1}, {v}_{ref 1}\right) + \left(1-β\right) ⋅ warp \left({\hat{x}}_{r ef 2}, {v}_{ref 2}\right) ,$ (9) where *warp* is an operator that warps (i.e., spatially maps) an image into another image based on motion vectors given by an optical flow. Specifically, a first reference image, *x̂*_{*ref*1}, is warped into a first prediction, ***x̃***₁ = *warp*(***x̂***_{*ref*1}*, v*_{*ref*1}) and a second reference image, *x̂*_{*ref*2} is warped into a second prediction, ***x̃*₂** = *warp*(***x̂***_{*ref*2}*, v*_{*ref*2}). Using elementwise multiplication, denoted by "·", the two predictions are then blended by the mask *β*, yielding the prediction image ***x̃***. As illustrated in FIG. 9, the prediction image *x̃* (output of the motion compensation unit 930) is then corrected by the residual image ***r*,** as follows: $\hat{x} = r + ∝ ⋅ {x}^{˜} ,$ (10) where, the prediction mask ∝ is a binary mask that can be used to mask out 940 a prediction pixel if it does not reliably predict the corresponding pixel in ***x*.** Adding 950 the masked prediction image, ∝· ***x̃**,* to the residual image ***r*** produces the reconstructed image 970, ***x̂***.

Hence, the two optical flows, *v*_{*ref*1} and *v*_{*ref*2}, the weight mask *β*, the prediction mask ∝, and the residual image ***r*** can be learned by minimizing the coding cost expressed in equation (4), where *f**_{θ}***(*ẑ*) *= **x̂** =* ***r*+∝·** ***x̃**.* Note that the predictive hybrid INR model, illustrated in FIG. 9, can be applied using only one reference image or any number of reference images available in the decoded frame buffer 960. In such a case equation (9) can be expressed as: ${x}^{˜} = {\sum }_{q = 1}^{Q} {β}_{q} ⋅ warp \left({\hat{x}}_{ref q}, {v}_{ref q}\right) ,$ (11) Where, *Q* is the number of reference images used; where ${\sum }_{q = 1}^{Q} {β}_{q}$ is equal to an all-ones matrix. where *v*_{*ref*q} is the optical flow with respect to ***x̂***_{*ref*q}, that is, the *q^{th}* reference image. In a variant, the weight mask *β*, the prediction mask oc, or both can be removed from the predictive hybrid INR model.

FIG. 10 is a block diagram illustrating an example video decoder 1000 applying a predictive hybrid INR model. The decoder 1000 receives, as an input, a bitstream 1010 and outputs reconstructed images 1070. The decoder 1000 includes a hybrid INR model 1020, a motion compensation unit 1030, a multiplier 1040, an adder 1050, and a decoded frame buffer 1060. The hybrid INR model 1020 generally operates (in an inference mode) as the hybrid INR model described in reference to FIG. 7. However, in this case the hybrid INR model produces two optical flows, *v*_{*ref*1} and *v*_{*ref*2}, a weight mask *β*, a prediction mask ∝, and a residual image ***r*.** The optical flows represent the pixel-wise motion between respective reference frames (already reconstructed images 1070, stored in the decoded frame buffer 1060) and the current frame. And so, the motion compensation unit 1030 can use these optical flows to generate a prediction, denoted by ***x̃**,* of the currently decoded image ***x*,** as expressed by equation (9). As illustrated in FIG. 10, the prediction image ***x̃*** (output of the motion compensation unit 1030) is then corrected by the residual image ***r*,** as shown by equation (10). Adding 1050 the masked prediction image, ∝· ***x̃**,* to the residual image ***r*** produces the reconstructed image 1070, ***x̂***.

Recently, a method has been proposed to better handle local contents in a signal compressed by a hybrid INR model. For instance, a European Patent Application 25305121.3, filed on 29-Jan-2025 by the same applicant, discloses to partition the input domain into coding units (CU) (e.g. a coding tree unit (CTU)) and to associate each coding unit to different upsampling and/or synthesis network of the hybrid INR model.

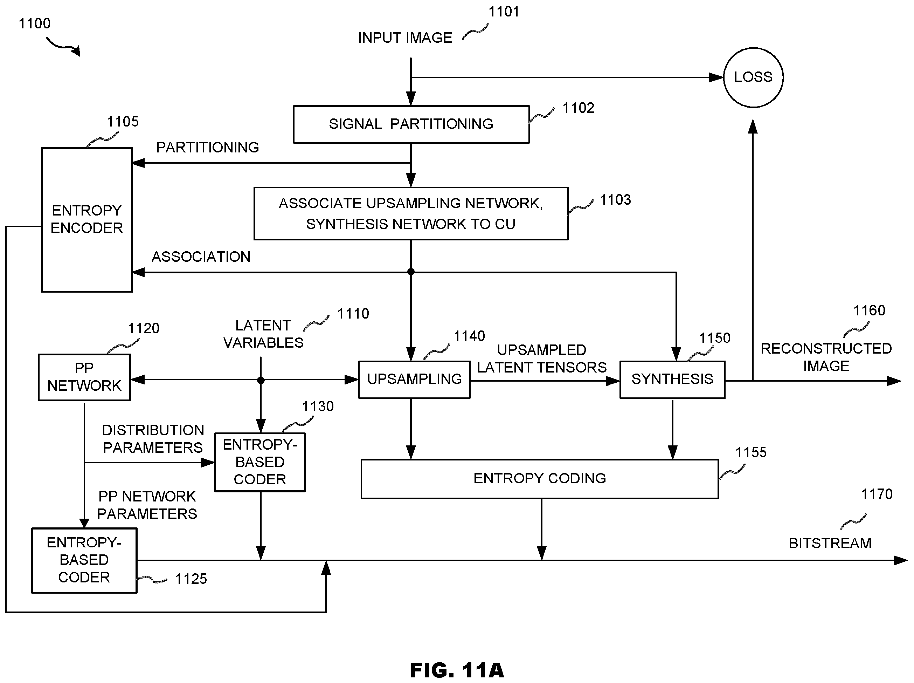

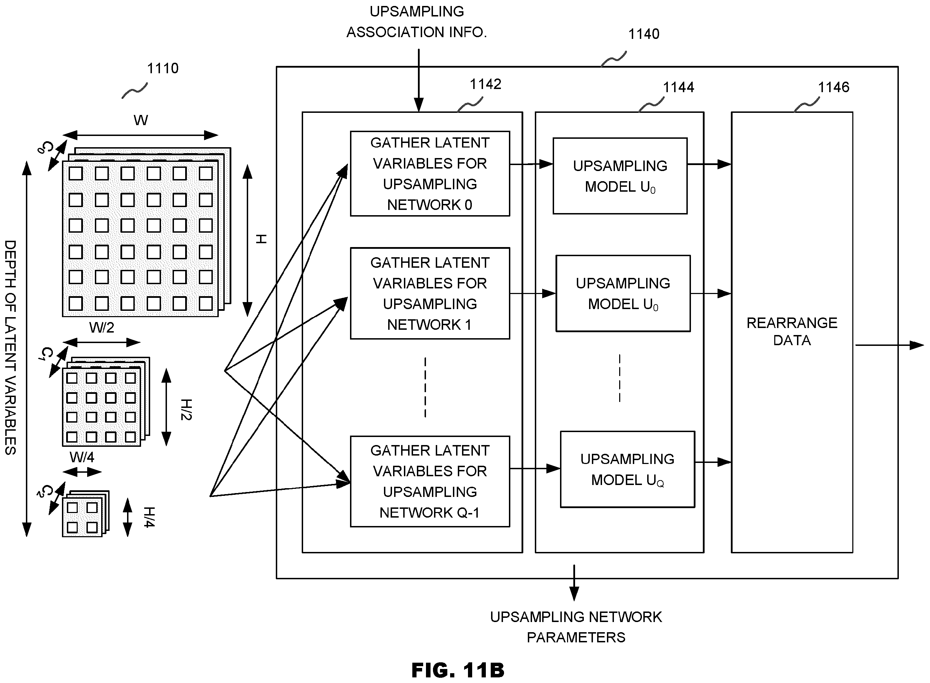

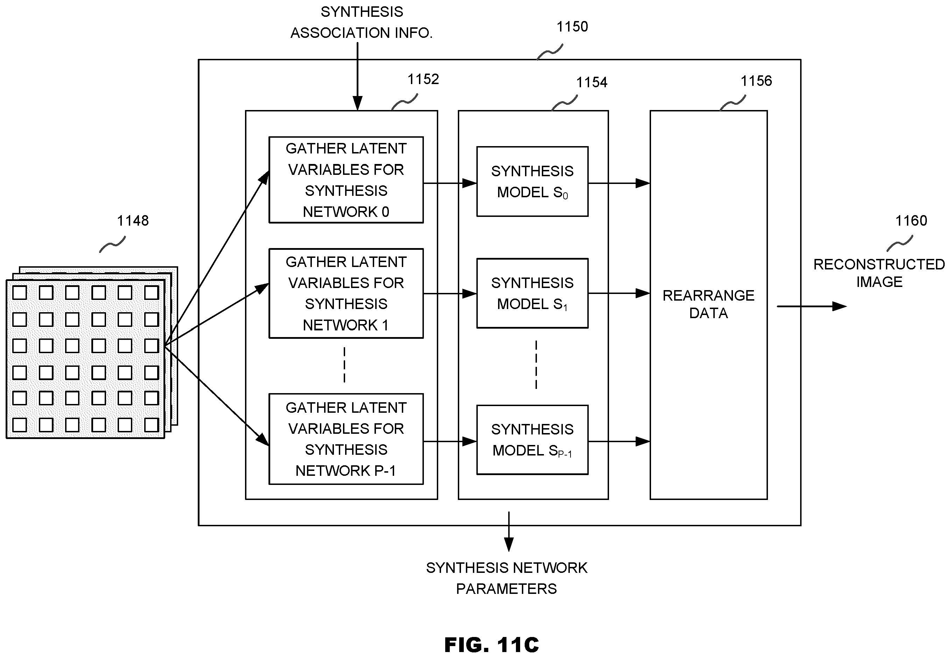

FIGs. 11A, 11B and 11C illustrate an encoder that partitions a signal into coding units (CU) and associates each coding unit to different upsampling and/or synthesis network of an hybrid INR model according to one or more embodiments of the present disclosure. The encoder includes a probability prediction (PP) network 1120, Q up-sampling models 1144, P synthesis models 1154, and entropy-based coders 1105, 1125, 1130, 1155. The signal (1101, e.g., an image) is first partitioned into coding units (1102). To each coding unit is associated (1103) one out of *Q* up-sampling networks and one out of *P* synthesis networks. The partitioning information and the associations are included in the bitstream, which may involve entropy coding (1105).

The encoder 1100 is configured to process latent variables 1110 (e.g., latent variables 525 generated by the mapping unit 520 of FIG. 5). Then, the latent variables are up-sampled by an up-sampling unit (1140), as illustrated in FIG. 11B. The up-sampling unit (1140) gathers (1142) the latent variables that are to be up-sampled and that are associated (1103) to the same up-sampling network. Each group of latent variables is up-sampled by the corresponding up-sampling model 1144. The up-sampled latent variables are then rearranged (1146) to reconstruct the up-sampled latent tensors (1148), i.e., the output is associated to the proper position in the upsampled latent tensor. The encoder then reconstructs the encoded signal from the upsampled latent variables using a synthesis unit 1150, as illustrated in FIG. 11C. It first gathers (1152) the latent variables that are associated (1103) to the same synthesis network. Then, each group of up-sampled latent variables is processed by the corresponding synthesis network 1154. Finally, the reconstructed data 1160 (e.g., a reconstructed image of a video frame) is obtained by rearranging (1156) the output of the synthesis networks, i.e., the output is associated to the proper position in the reconstructed image.

Together with the latent variables 1110, the up-sampling networks 1144 and the synthesis networks 1154 are trained (overfitted) to produce this reconstructed data 1160 (e.g., a reconstructed image of a video frame). The training results in optimal neural network parameters *θ* that are coded, by the entropy-based coder 1155, into the bitstream 1170. In an inference mode, reconstructing the data (e.g., by a decoder 700) involves feeding the trained synthesis networks, defined by the optimal network parameters *θ*, with the associated (1103) up-sampled latent variable. Consequently, in addition to the network parameters *θ*, the latent variables need to be coded into the bitstream 1170. To that end, the encoder 1100 can be further configured to learn the distributions of respective latent variables using the PP network 1120 - that is, a network trained to produce parameters of distributions of respective latent variables. Based on these learned distribution parameters the entropy-based coder 1130 codes the latent variables into the bitstream 1170. The PP network is defined by PP network parameters, denoted by ψ, determined during the training of the PP network 1120. The entropy-based coder 1125 codes these PP network parameters into the bitstream 1170.

In the example of FIG. 11A, while the entropy-based coder 1130 that codes the latent variables relies on their learned respective distributions, the other entropy-based coders 1105, 1125, 1155 that code the PP network parameters and the up-sampling and synthesis network parameters rely on respective non-learned distributions. In an aspect, for some of the latent variables, respective non-learned distributions can be used by the entropy-based coder 1130. These non-learned distributions may be fixed distributions or may be distributions that was learned with respect to other latent variables (e.g., latent variables representing data from previous frames).

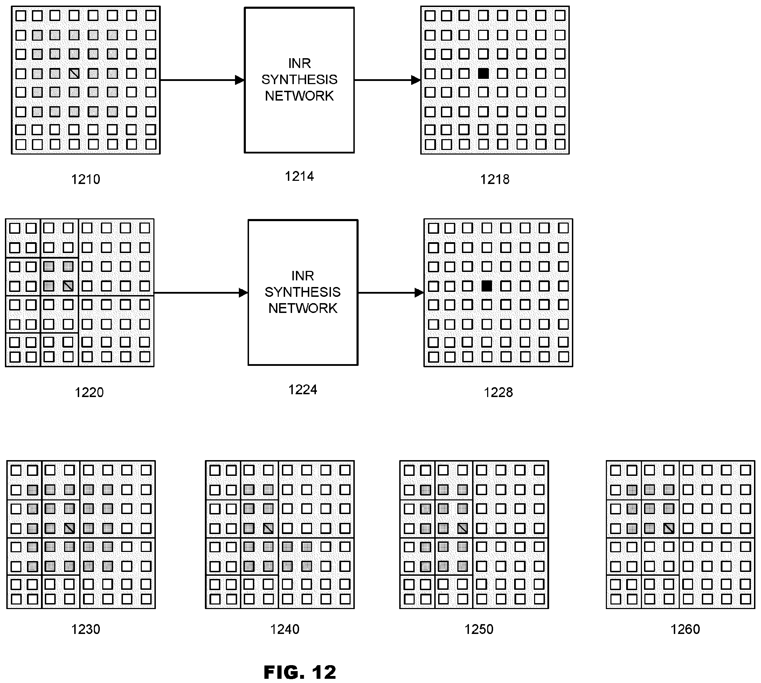

FIG. 12 illustrates examples of pixels, receptive field and partitioning (e.g. into coding units) according to one or more embodiments of the present disclosure. In a typical INR model without signal partitioning, when the synthesis network contains convolutional layers with kernels larger than 1, the upsampled latent values used to predict a reconstructed pixel ***x̂***(*i, j*) include these associated to neighboring pixels. To give an example, if F is the receptive field size of the synthesis network and *K* the number of layers of latent values, {*ẑ*(i', j', *k*)*, k* = 0: (*K* - 1)), i' = i - $\left.\frac{\left(F-1\right)}{2}:i+\frac{\left(F-1\right)}{2},j′=j-\frac{\left(F-1\right)}{2}:j+\frac{\left(F-1\right)}{2}\right\}$ are the upsampled latent values used to predict a reconstructed pixel ***x̂***(*i, j*). Then, the upsampled latent values 1210 are processed by the synthesis network 1214 with a receptive field size of 5 to generate the signal values 1218. To obtain the signal value for one particular position (in black in 1218), all upsampled latent values in the receptive field are used. They are colored in light grey, the crossed latent value corresponds to the one associated to the signal position being decoded.

At the border of the picture, padding is used to generate alternative upsampled latent values, so that computation for the border area can be performed. Possible options may include zero-padding, constant padding, replication padding or mirror padding.

When a synthesis network is associated with a part of the signal (e.g. a coding unit) as described above, it processes only the upsampled latent values of this part of the signal. This is illustrated on FIG. 12 with the same signal, but with partitioning (1220) and a same synthesis network (1224). In the present specification, a partition, a part of the signal or a coding unit may be used indifferently. To obtain the decoded signal value 1228, only 4 upsampled latent values of this coding unit (in light grey on 1220) would be used. However, upsampled latent values from neighboring coding units may be useful to reconstruct the signal better. Neighboring coding units of a given coding unit are defined as coding unit containing pixels that would be in the receptive field size of the synthesis network for any pixel of that given coding unit.

Accordingly, the present principles propose forming upsampled latent variables belonging to the receptive field of the synthesis network of a partition of the signal by processing the latent variables of the partition, and/or latent variables of the one or more respective neighboring partitions, and/or the alternative latent variables. Advantageously, such upsampled latent variables may then be used to synthesize the parts of the signal when a hybrid INR model is used.

According to embodiments, upsampled latent variables belonging the receptive field of the synthesis network of a partition may be obtained by a) not processing neighboring upsampled latent values; b) processing all neighboring upsampled latent values; c) processing upsampled latent values from a subset of neighboring coding units; d) only upsampled latent values from neighboring coding units associated to the same synthesis network.

According to other variant embodiments, upsampled latent variables belonging the receptive field of the synthesis network of a partition may be obtained by generating alternative upsampled latent variables in the case where upsampled latent values from a subset of neighboring coding units are not used (a)).

According to yet other variant embodiments upsampled latent variables belonging the receptive field of the synthesis network of a partition may be obtained by combining upsampled latent values from neighboring coding unit and generated alternative upsampled latent values.

According to one or more embodiments, the encoder may be configured to select and signal any of the variant embodiments for forming upsampled latent variables of a partition.

According to one or more embodiments, an encoding method and a corresponding decoding method for hybrid-INR are disclosed.

According to one or more embodiments, an encoding method and a corresponding decoding method adapted to the COOL-CHIC algorithm are disclosed.

FIG. 12 illustrates examples of the upsampled latent variables of a pixel in a partition according to one or more embodiments of the present disclosure.

According to a first embodiment, a synthesis network associated to a signal part (e.g. a partition or a coding unit) may use upsampled latent variables (also referred as values) from a neighboring signal part (e.g. a neighboring partition or a neighboring coding unit).

According to a second embodiment, alternative upsampled latent variables may be generated when the upsampled latent variables from a neighboring signal part are not used.

According to a third embodiment, an encoder may be allowed to combine upsampled latent variables from a neighboring signal part and generated alternative upsampled latent variables. This combination may be achieved by applying any processing operations on them, including averaging, weighted averaging or processing by a neural network. In that case the encoder may signal the used variant, the signal part or set of signal parts and additional parameters such as the weights of the averaging operations or the neural network.

According to a fourth embodiment, an encoder may be allowed to select any of these variant embodiments.

### Feature(s) associated with choosing used neighboring coding units

According to different variants of first embodiment, the latent variables of the partition and latent variables of one or more respective neighboring partitions are used to form upsampled latent variables used by a respective synthesis model associated to the partition.

According to a particular feature, the encoder may always use the same variant. According to other features, the encoder may choose one out of a subset of these variants to achieve the best performance. In that case, the variant chosen must be signaled in the bitstream. Accordingly, information indicating a selection of one or more respective neighboring partitions used in the respective processing model of the partition may be signaled. The selection may be performed and signaled at various level, for instance, for the whole signal, for each signal part (e.g. a coding unit) and/or each set of signal parts (e.g. a frame of a video, a slice in a frame etc).

In a first variant of the first embodiment, the encoder may process all neighboring upsampled latent values. This is illustrated by 1230 in FIG. 12. Accordingly, information related to the selection of latent variables of one or more respective neighboring partitions or alternative latent variables used in the respective processing model of the partition indicates that the latent variables of all respective neighboring partitions are used in the respective processing model.

In a second variant, the encoder may process latent values from a subset of neighboring coding units that it is allowed to choose. This is illustrated by 1240 in FIG.12. Here, the encoder has chosen to only use upsampled latent values for the top, bottom and bottom right coding units. In this variant, the selected neighboring coding units may be signaled. Thus, information related to the selection of one or more respective neighboring partitions used in the respective synthesis model of the partition indicates the latent variables of a subset of respective neighboring partitions are used in the respective processing model. Information on the selected respective neighboring partitions (top, bottom, bottom-right...) belonging the subset may be optionally signaled.

In a third variant, the encoder may use latent values from neighboring coding units that are associated with the same synthesis network. This is illustrated by 1250 on FIG. 12 for the case where a coding unit is associated to one synthesis network based on its size. Here, only upsampled latent values of neighboring coding units of size 2x2 are used as the currently decoded coding unit is of size 2x2. Thus, information related to the selection of one or more respective neighboring partitions used in the respective processing model of the partition indicates that the latent variables of a subset of respective neighboring partitions are used in the respective synthesis model of the partition. For instance, the subset is based on the feature of neighboring partitions having a same size as the partition. For instance, the subset is based on the feature of neighboring partitions having a same synthesis model.

In a variant, the encoder may process only latent values from neighboring coding units that have already been decoded. This has for example the advantage of enabling wavefront decoding. This is illustrated by 1260, assuming that coding units are decoded in a depth-first processing order. Thus, in case the latent variables of the plurality of partitions are encoded or decoded in a depth-first processing order, a subset of respective neighboring partitions comprises respective neighboring partitions already encoded or decoded.

In a variant, the encoder may also be allowed to use or to choose to restrict upsampled latent values from a neighboring signal part based on the adjacency distance between the signal part and the neighboring signal part.

In a variant, the encoder may be allowed to associate a variant or to restrict the variants that can be used by a particular synthesis network rather than or in addition to signal parts.

In some variants, the encoder may signal that some coding units may never be included in the set of chosen neighboring coding units. More generally, in some variants, the encoder may signal which coding units are not included in the set of chosen neighboring coding units rather than chosen.

These variants may be combined together to generate new variants. For example, the encoder may be able to choose from a subset of neighboring coding units that have already been decoded the neighboring coding units whose upsampled latent values will be used by the synthesis network.

### Feature(s) associated with generating alternative upsampled latent value method

According to different variants of second embodiment, the latent variables of the partition and alternative latent variables are used to form upsampled latent variables used by a respective synthesis model associated to the partition.

According to a first variant of second embodiment, the encoder may choose to use a method to generate alternative upsampled latent values when the upsampled latent values from a neighboring signal part are not used. That is, considering a subset of neighboring signal parts for which a pixel may belong to the receptive field of a synthesis network of the processed signal parts, alternative values may be generated for the remaining parts belonging to the receptive field but not to the subset. In the case where the first embodiment is not allowed, alternative upsampled latent variables may be generated for all pixels of the receptive field.

In some variant embodiments, the encoder may always use the same variant. In other variant embodiments, the encoder may choose one out of a subset of these variants to achieve the best performance. In that case, the variant chosen may be signaled in the bitstream. This choice may be performed and signaled at various levels such as for the whole signal, for each signal part (e.g. a coding unit), each set of signal parts (e.g. a frame of a video, a slice in a frame etc) and/or each neighboring coding unit.

In a first variant of the second embodiment, the encoder may choose to use padding such as zero-padding, constant padding, replication padding or mirror padding. Thus, information related to alternative latent variables used in the respective processing model of the partition indicates that alternative latent variables are obtained by one of zero-padding, constant padding, replication padding or mirror padding. For instance, information may also indicate for which respective neighboring partitions, alternative latent variables are generated.

In a second variant, the encoder may choose to obtain alternative upsampled latent value by processing the decoded reconstruction of the signal in these neighboring coding units. This could for example be done by estimating upsampled latent values that would generate the signal values using the synthesis network of the current coding unit. Thus, information related to the alternative latent variables used in the respective processing model of the partition indicates that alternative latent variables are obtained by estimating latent variables of a subset of respective neighboring partitions already reconstructed.

In another variant, the encoder may choose to obtain alternative upsampled latent value by processing the upsampled latent values of these neighboring coding units. As an example, it could be done by using a neural network or other function to adapt these upsampled latent values to the domain of the synthesis network of the current coding unit

In another variant, the encoder may choose to obtain alternative upsampled latent value by processing the latent values of these neighboring coding units. As an example, it could be done by using a neural network or other function to adapt these latent values to the domain of the synthesis network of the current coding unit

### Feature(s) associated with an encoding method

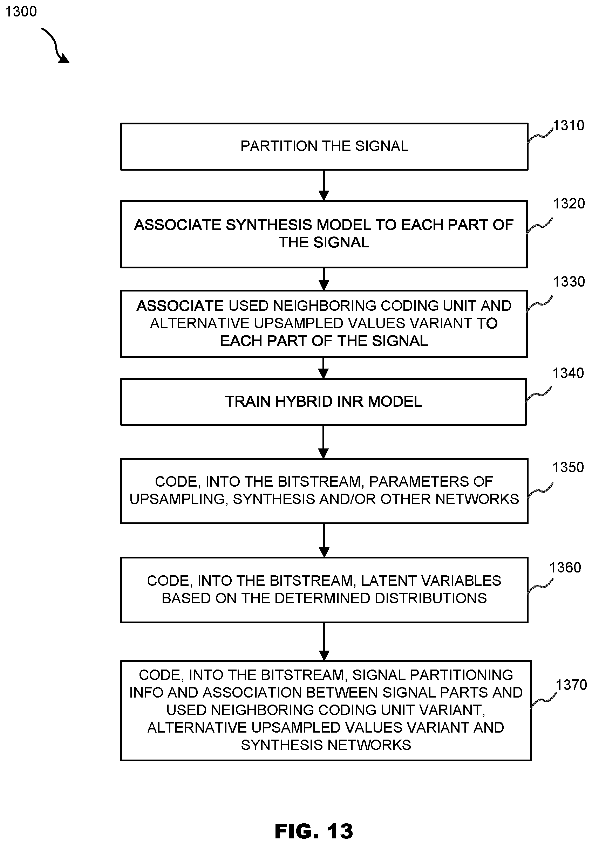

FIG. 13 is a block diagram illustrating an encoding method according to one or more embodiments of the present disclosure.

In step 1310, the signal (e.g., a frame) is divided into parts. The signal is partitioned into into a plurality of partitions, or parts, or coding units (CU). Examples of possible choices include fixed-size window, quadtree, superpixels, binary-tree, ternary-tree partitioning or Multi-Type Tree. Many approaches are possible to partition the signal into coding tree units. A brute force approach is possible, where all possible partitions are considered. Another possible approach is a greedy search where an initial CU covering the whole signal is incrementally divided by evaluating the impact of a CU split and splitting is done if the impact in terms of rate/distortion is positive. In other words, a CU is split further if its encoding (together with its associated latent grids) is less advantageous in terms of rate distortion than encoding its children. It is also possible to build the CU partition without using or learning hybrid INR models. As an example, both a brute force or a greedy search approach could optimize other characteristics of the CUs, such as pixel mean, variance, texture and/or any other statistics of the signal within the considered CUs. Another possible approach is to use a segmentation algorithm that uses the characteristics of the image to choose a good partitioning, including segmentation algorithm based on machine learning.

In a step 1320, for each partition of the plurality of partitions, an association of the partition to a respective processing model of a plurality of processing models is obtained. A processing model may correspond to any neural network model that may change with the partitions and that is used, for instance, in INR or Hybrid INR coding such as a synthesis model, an upsampling model or even a probability prediction model. The synthesis model corresponds to an INR (Implicit Neural Representation) network or to a part of the INR network. This step associates one synthesis model to each part of the signal. It may involve evaluating the performance of different synthesis model on this part of the signal, comparing these performances to different synthesis models on this and on other parts of the signal, choosing one synthesis model directly based on the characteristics of this part of the signal, for example through an expert designed algorithm or a machine learning model. As an example, a brute force approach may define a set of P synthesis networks, and would evaluate all possible associations between the coding units and the synthesis networks in terms of bitrate and distortion and select the particular association that minimizes the cost associated to the encoding and reconstruction of that part of the signal as a function of the association between the coding units and the P synthesis networks. In another embodiment, a coding unit may be associated to one synthesis network based on its size.

In a step 1330, for each partition of the plurality of partitions, one or more respective neighboring partitions latent variables or alternative latent variables used in the respective processing model of the partition are selected. Accordingly, the encoder may choose neighboring coding units whose latent values will be used and coding units for which alternative upsampled latent values will be used. This step associates one variant described above to each part of the signal, to the whole signal or to each set of signal parts. It may involve evaluating the performance of different choice of used neighboring coding unit and alternative upsampled values variant on each part/set of parts of the signal or the whole signal, comparing these performances to different used neighboring coding units and alternative upsampled values variant on other parts of the signal, choosing one used neighboring coding unit variant and alternative upsampled values variant directly based on the characteristics of this part of the signal, for example through an expert designed algorithm or a machine learning model. As an example, a brute force approach may evaluate all possible associations between the coding units and the used neighboring coding unit variants and the alternative upsampled values variants in terms of bitrate and distortion and select the particular association that minimizes the cost associated to the encoding and reconstruction of that part of the signal as a function of the association between the coding units and the used neighboring coding unit variant and alternative upsampled values variant.

In a step 1340, for each partition of the plurality of partitions, latent variables associated with coordinates of samples of the signal are obtained for instance by training the Hybrid INR model. The Hybrid INR model is trained, using, for each part of the signal, the associated synthesis network applied on the latent values of that part of the signal, extended by the latent values from neighboring coding unit defined by the used neighboring coding unit variant and alternative upsampled values generated following the alternative upsampled values variant. This is the same procedure as training a hybrid INR model. Typically, the full INR model is trained together, including the up-sampling network, the synthesis networks, the latent values and the autoregressive model (or other PP model) yielding a probability distribution over the latent values. In another variant, the model may be trained in multiple steps, by first training a single synthesis network and iteratively dividing the coding units into sets and associating a different synthesis network and/or used neighboring coding unit variant and/or alternative upsampled values variant to each set, for example by clustering the coding units based on the performance of the networks trained in the previous step and/or on intermediate features of these networks, and then retraining the networks and testing different used neighboring coding unit variants. In some variants, training may involve quantization aware training. The training procedure may also involve steps to account for the coding of the probability model, such as quantization, pruning etc., for example by applying these steps, using additional noise and/or adding specific terms to the loss function such as the rate of the network parameters.

In a step 1350, model parameters for the plurality of processing models are encoded. The neural networks processing models (probability model, P synthesis models and up-sampling models) are encoded in a bitstream (1350). If the model involves a neural network, this is typically done by a neural compression codec such as Neural Network Coding (NNC)/ ISO/IEC 15938-17 or MPEG-7 part 17 or simply by quantizing the weights and/or pruning some neurons from the network(s).

In a step 1360, the latent variables are coded by an entropy coder, based on the discrete probability distribution over the quantized latent features given by the autoregressive model (or other model). This may involve quantization of the latent features if this was not done before.

In a step 1370, signaling is encoded into the bitsream. Signaling may include information indicating partitioning of the signal into a plurality of partitions for each partition of the plurality of partitions, information indicating association of a partition to a respective processing model of a plurality of processing models, information indicating a selection of one or more respective neighboring partitions or alternative latent variables used in the respective processing model of the partition. Therefore, the partition and the association between signal parts and used neighboring coding unit variant, alternative upsampled values variant and synthesis networks are encoded into the bitstream (1370). This may involve the use of entropy coders. A method used in a video coding standard, for example, in HEVC or VVC, may be used to encode the partitioning.

The procedure above describes a sequential approach to solve the aforementioned optimization problem. There are many possible variants of this procedure in addition to those listed above. For example, several elements could be optimized at the same time. The partition, the association between coding units and used neighboring coding unit variants, alternative upsampled values variants and synthesis networks, the parameters and/or the encoding length could be optimized together using any optimization algorithm such as greedy search, gradient descent of a specific loss, genetic algorithms, the use of machine learning algorithms etc. As another example, a used neighboring coding unit variant, an alternative upsampled values variant and synthesis network associated to a coding unit could be based at least partially on the result of the encoding of a previous coding unit with the same or different used neighboring coding unit variant, alternative upsampled values variant and synthesis network, for example using a reinforcement learning or an active learning algorithm. In yet another example, one or multiple steps may also involve some computation that can be beneficial or reused for another step. Some approaches for partitioning the signal or choosing the used neighboring coding unit variant, the alternative upsampled values variant and synthesis network associated to a coding unit may require the computation and the evaluation of hybrid INR models, to evaluate the quality of such a partitioning and/or associated used neighboring coding unit variants and/or alternative upsampled values variant and/or synthesis network. In that case, these computations may be reused in the other step or the results of that other step may be directly obtained from said computation or the two steps merged.

In some variants, a default used neighboring coding unit variant may be included in the bitstream.

### Feature(s) associated with a decoding method

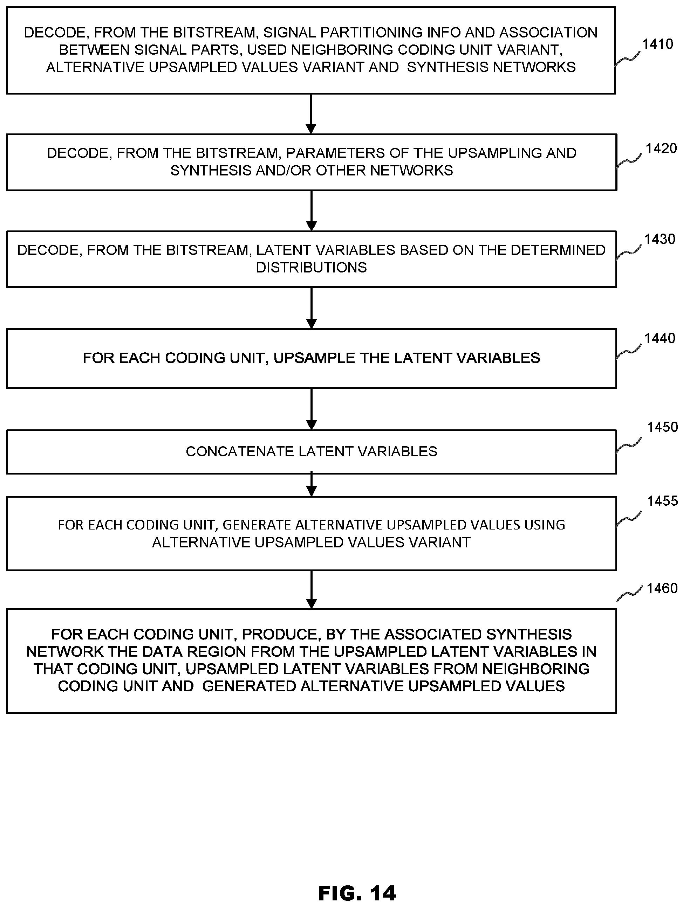

FIG. 14 is a block diagram illustrating a decoding method according to one or more embodiments of the present disclosure. The resulting bitstream may be decoded for example by the method of FIG. 14.

In a step 1410, the partition and the association between signal parts, used neighboring coding unit variants and/or alternative upsampled values variant and/or synthesis networks of the image is decoded. For instance, information indicating partitioning of the signal into a plurality of partitions is decoded. Then, for each partition of the plurality of partitions, information indicating association of the partition to a respective processing model of a plurality of processing models, information indicating a selection of one or more respective neighboring partitions or alternative latent variables used in the respective processing model of the partition is also decoded.

In a step 1420, model parameters for the plurality of processing models are decoded. The parameters of the neural network processing models (e.g. probability model such as an auto-regressive model, P synthesis models and/or up-sampling models) are obtained. This is typically done by decoding these models from the bitstream, but some or all models may already be available to the decoder, for example because some or all models have been used for another part of the signal or are transmitted separately.

In a step 1430, latent variables (or latent values) are decoded from the bitstream, for example using the auto-regressive or other probability model and an entropy decoder as in any hybrid INR method and described above.

In the steps 1440, 1450, 1455, for each partition of the plurality of partitions, upsampled latent variables are formed by processing/concatenating any of the latent variables of the partition, the latent variables of the one or more respective neighboring partitions, the alternative latent variables. In step 1440, the decoded features (i.e. latent variables) may be up-sampled, for example based on the decoded upsampling model(s). In an optional step 1450, all latent grids are concatenated. In 1455, for each coding unit, the alternative upsampled values are generated using the associated alternative upsampled values variant, if necessary. The associated alternative upsampled values variant used is identified by the association information decoded in step 1410.

Then, in a step 1460, for each partition of the plurality of partitions, the upsampled latent variables are processed by their respective processing model to form processed latent variables and the signal part is reconstructed. Indeed, the up-sampled and concatenated latent features of that coding unit and of the neighboring coding units and the alternative upsampled values are used by the associated synthesis network to decode the signal (1460). The neighboring coding units are identified based on the used neighboring coding unit variant information decoded in step (1410). The associated synthesis network used is identified by the association information decoded in step (1410). In some variants, all coding units using the same synthesis networks may be processed at the same time. The decoded values may then be rearranged to obtain the decoded signal (e.g. frame). For 2D images or video, the output of the synthesis networks would typically be pixel colors. For 3D scene, the output would typically be color and density of a voxel. For a 3D surface (e.g. hologram), it may be a signed or unsigned distance to the surface.

In some variants, the concatenation step may be omitted, for example when up-sampled decoded features of all levels are directly stored in a single tensor.

In some variants, a default used neighboring coding unit variant may be decoded from the bitstream. In some variants, decoded used neighboring coding unit variant may be associated to the whole signal, to each set of signal parts (e.g. a frame of a video, a slice in a frame etc) or to a synthesis network instead.

In some variants, a default alternative upsampled values variant may be decoded from the bitstream. In some variants, decoded alternative upsampled values variant may be associated to the whole signal, to each set of signal parts (e.g. a frame of a video, a slice in a frame etc) or to a synthesis network instead.

### Feature(s) associated with a specific example of decoding method

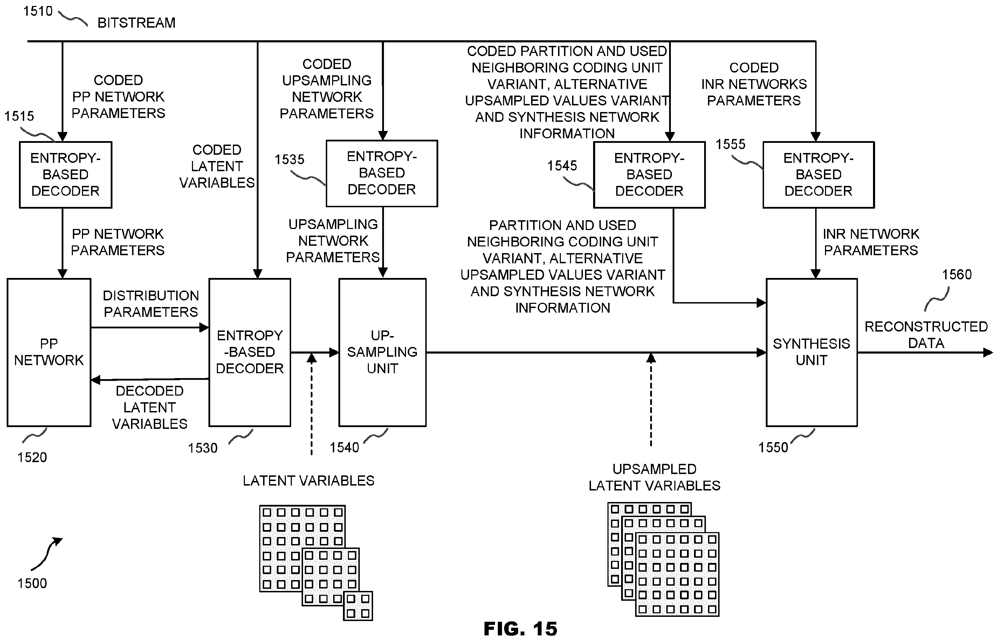

FIG. 15 is a block diagram illustrating a specific example decoding method according to one or more embodiments of the present disclosure. In the specific example of FIG. 15, the decoded latent variables (features) can be used to decode the signal as in the COOL-CHIC algorithm.

The decoder 1500 includes a PP network 1520, an up-sampling unit 1540, a synthesis unit 1550, and entropy-based decoders 1515, 1530, 1535, 1545, 1555. The PP network 1520 produces distribution parameters of the respective latent variables. The PP network 1520 operates based on learned PP network parameters ψ, determined during the training of the PP network (620 or 1120). The entropy-based decoder 1515 decodes these PP network parameters from the bitstream 1510. Based on the produced 1520 distribution parameters, the entropy-based decoder 1530 decodes the identified latent variables from the bitstream 1510. Already decoded latent variables are provided back to PP network to serve as a context in producing the distribution parameters of the currently decoded latent variable (as described in reference to FIG. 8).

The up-sampling unit 1540 up-samples the decoded latent variables. As performed by the up-sampling unit 1150 at the encoder 1100, the up-sampling network is used to obtain the up-sampled latent variable. In some variants, up-sampling networks may also be associated to each coding unit.

The entropy-based decoder 1545 decodes the signal partitioning information and the used neighboring coding unit variant, the alernative upsampled values variant and synthesis network associated to each part of the signal from the bitstream 1510.

Fed by the up-sampled latent variables, the synthesis unit 1550 reconstructs the data 1560 (e.g., a reconstructed image of a video frame) for which the synthesis unit 1550 is trained to synthesize based on the synthesis network parameters, decoded from the bitstream 1510 by the entropy-based decoder 1555, and based on the partitioning information, used neighboring coding unit variant, alternative upsampled values variant and synthesis network associated to each part of the signal. For each coding unit, the input of the associated synthesis network is first prepared, by using the upsampled latent value of this coding unit and padding them using either the upsampled latent value for the neighboring coding unit as identified by the decoded used neighboring coding unit variant for this coding unit or alernative upsampled values generated by a procedure identified by the decoded alternative upsampled values variant associated to this coding unit. As performed by the synthesis unit 1150 at the encoder 1100, for each coding unit, the synthesis network associated to this coding unit is used to obtain the decoded signal values for this coding unit from prepared input.

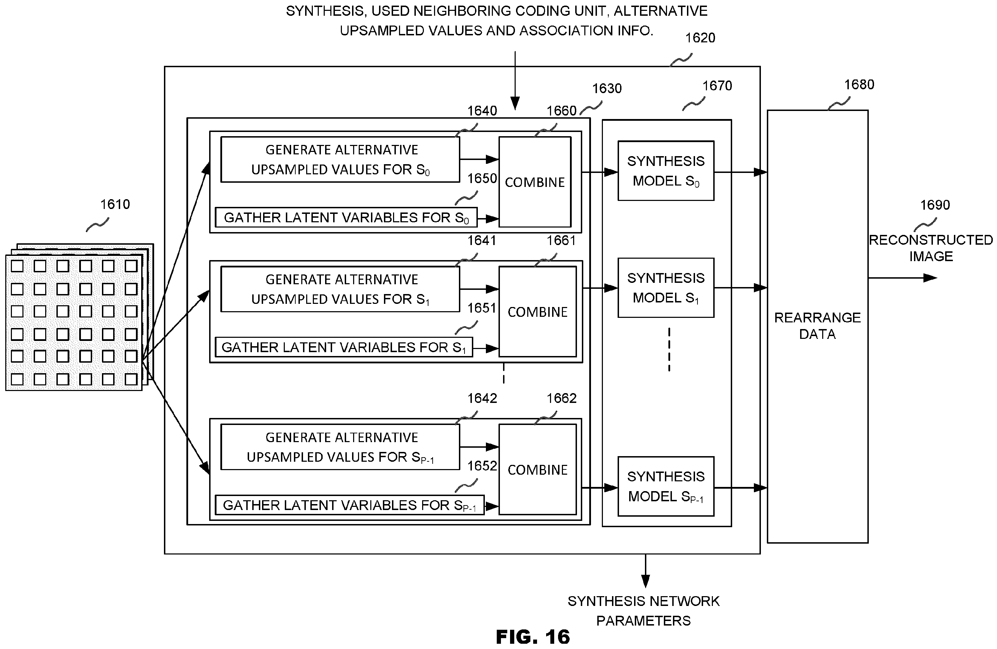

FIG. 16 is a block diagram illustrating specific examples of processing models according to one or more embodiments of the present disclosure. FIG. 16 for instance illustrates the operation that a synthesis unit (e.g. 1150, 1550) may have in decoding method of FIG. 11A or FIG. 15. The input is partitioned into coding units (CU) (e.g. a coding tree unit (CTU) ) and each coding unit is associated to different synthesis network of the hybrid INR model.

The encoder then reconstructs the encoded signal from the upsampled latent variables using a synthesis unit 1150 from up-sampled latent tensors (1610). For each synthesis network (and/or each coding unit associated to the network), the synthesis unit first generates alternative upsampled values when necessary (1640, 1641, 1642) and gathers (1650, 1651, 1652) the latent variables that are associated to the same synthesis network and the latent variables from used neighboring coding unit. These values may then be combined (1660, 1661, 1662) to generate the input of the synthesis networks.

Then, each group of up-sampled latent variables is processed by the corresponding synthesis network 1670. Finally, the reconstructed data 1680 (e.g., a reconstructed image of a video frame) is obtained by rearranging (1680) the output of the synthesis networks, i.e., the output is associated to the proper position in the reconstructed image.

As illustrated by FIG. 16, the generating of alternative upsampled values, the gathering of latent values of the partitions, alternative upsampled latent values and/or latent values of the neighboring partitions may be implemented as part of the upsampling model or of the synthesis model.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of decoding a signal, comprising:
decoding (1410) information indicating partitioning of the signal into a plurality of partitions;
decoding (1410), for each partition of the plurality of partitions, information indicating association of the partition to a respective processing model of a plurality of processing models, information indicating a selection of one or more respective neighboring partitions or alternative latent variables used in the respective processing model of the partition;
decoding (1420) model parameters for the plurality of processing models;
decoding (1430) latent variables;
for each partition of the plurality of partitions:
processing (1440, 1445, 1455) the latent variables of the partition, latent variables of the one or more respective neighboring partitions, the alternative latent variables to form upsampled latent variables,
processing (1460) the upsampled latent variables based on the respective processing model to form processed latent variables;
reconstructing the partition from the processed latent variables; and concatenating the partitions to form a reconstructed signal.

2. An apparatus for decoding a signal, comprising one or more processors and at least one memory coupled to the one or more processors, wherein the one or more processors are configured to perform:
decoding (1410) information indicating partitioning of the signal into a plurality of partitions;
decoding (1410), for each partition of the plurality of partitions, information indicating association of the partition to a respective processing model of a plurality of processing models, information indicating a selection of one or more respective neighboring partitions or alternative latent variables used in the respective processing model of the partition;
decoding (1420) model parameters for the plurality of processing models;
decoding (1430) latent variables;
for each partition of the plurality of partitions:
processing (1440, 1445, 1455) the latent variables of the partition, latent variables of the one or more respective neighboring partitions, the alternative latent variables to form upsampled latent variables,
processing (1460) the upsampled latent variables based on the respective processing model to form processed latent variables;
reconstructing the partition from the processed latent variables; and concatenating the partitions to form a reconstructed signal.

3. A method of encoding a signal, comprising:
partitioning (1310) of the signal into a plurality of partitions;
for each partition of the plurality of partitions:
obtaining (1320) an association of the partition to a respective processing model of a plurality of processing models,
selecting (1330) one or more respective neighboring partitions or alternative latent variables used in the respective processing model of the partition,
obtaining (1340) latent variables associated with coordinates of samples of the signal;
encoding model parameters (1350) for the plurality of processing models;
encoding the latent variables (1360);
encoding information (1370) indicating partitioning of the signal into a plurality of partitions; and
encoding (1370), for each partition of the plurality of partitions, information indicating association of the partition to a respective processing model of a plurality of processing models, information indicating a selection of one or more respective neighboring partitions or alternative latent variables used in the respective processing model of the partition.

4. An apparatus for encoding a signal, comprising one or more processors and at least one memory coupled to the one or more processors, wherein the one or more processors are configured to perform:
partitioning (1310) of the signal into a plurality of partitions;
for each partition of the plurality of partitions:
obtaining (1320) an association of the partition to a respective processing model of a plurality of processing models,
selecting (1330) one or more respective neighboring partitions or alternative latent variables used in the respective processing model of the partition,
obtaining (1340) latent variables associated with coordinates of samples of the signal;
encoding model parameters (1350) for the plurality of processing models;
encoding the latent variables (1360);
encoding information (1370) indicating partitioning of the signal into a plurality of partitions; and
encoding (1370), for each partition of the plurality of partitions, information indicating association of the partition to a respective processing model of a plurality of processing models, information indicating a selection of one or more respective neighboring partitions or alternative latent variables used in the respective processing model of the partition.

5. The method of claim 1 or 3, or the apparatus of claim 2 or 4, wherein a processing model corresponds to a synthesis model or an upsampling model.

6. The method of any of claims 1, 5, or the apparatus of any of claims 2, 5 wherein a processing model corresponds to a synthesis model, the method further comprising, or the one or more processors are further configured to perform:
for each partition of the plurality of partitions:
decoding information indicating association of the partition to a respective upsampling model of a plurality of upsampling models,
wherein the latent variables are upsampled based on the respective upsampling model and concatenated with the one or more respective neighboring partitions, the alternative latent variables to form upsampled latent variables,
wherein the signal is reconstructed from the upsampled latent variables based on the respective synthesis model.

7. The method of any of claims 3, 5, or the apparatus of any of claims 4-5, wherein a processing model corresponds to a synthesis model, the method further comprising or the one or more processors are further configured to perform:
for each partition of the plurality of partitions:
encoding information indicating association of the partition to a respective upsampling model of a plurality of upsampling models,
wherein the latent variables are upsampled based on the respective upsampling model and concatenated with the one or more respective neighboring partitions, the alternative values to form upsampled latent variables,
wherein the signal is reconstructed from the upsampled latent variables based on the respective synthesis models; and
encoding model parameters for the plurality of upsampling models.

8. The method of any one of claims 1, 3, 5-7, or the apparatus of any one of claims 2, 4-7, wherein information related to the selection of one or more respective neighboring partitions or alternative latent variables used in the respective processing model of the partition indicates that alternative latent variables are obtained by one of zero-padding, constant padding, replication padding or mirror padding.

9. The method of any one of claims 1, 3, 5-7, or the apparatus of any one of claims 2, 4-7, wherein information related to the selection of one or more respective neighboring partitions or alternative latent variables used in the respective processing model of the partition indicates that alternative latent variables are obtained by estimating latent variables of a subset of respective neighboring partitions already reconstructed .

10. The method of any one of claims 1, 3, 5-9, or the apparatus of any one of claims 2, 4-9, wherein information related to the selection of one or more respective neighboring partitions or alternative latent variables used in the respective processing model of the partition indicates that the latent variables of all respective neighboring partitions are used in the respective processing model.

11. The method of any one of claims 1, 3, 5-9, or the apparatus of any one of claims 2, 4-9, wherein information related to the selection of one or more respective neighboring partitions or alternative latent variables used in the respective processing model of the partition indicates the latent variables of a subset of respective neighboring partitions are used in the respective processing model.

12. The method of claim 11, or the apparatus of claim 11, wherein a subset of respective neighboring partitions comprises respective neighboring partitions having a same size as the partition.

13. The method of claim 11, or the apparatus of claim 11, wherein a subset of respective neighboring partitions comprises respective neighboring partitions associated to a same processing model.

14. The method of claim 11, or the apparatus of claim 11, wherein the latent variables of the plurality of partitions are encoded or decoded in a given order, and wherein a subset of respective neighboring partitions comprises respective neighboring partitions already encoded or decoded.

15. The method of any one of claims 5-14, or the apparatus of any one of claims 5-14, wherein the synthesis model corresponds to an INR (Implicit Neural Representation) network or to a part of the INR network.
